# EUROPEAN PATENT APPLICATION

(11) **EP 4 693 031 A1**
(43) Date of publication of application: **11.02.2026**
(21) Application number: 24813686.3
(22) Date of filing: 10.01.2024
(51) Int. Cl.: G06F 9/44

(54) **INTERFACE DISPLAY METHOD AND RELATED DEVICE**

(30) Priority: 26.05.2023 CN 202310611424
(71) Applicant: Huawei Technologies Co., Ltd., Shenzhen, Guangdong 518129 (CN)
(72) Inventor: LIU, Shichao, Shenzhen, Guangdong 518129 (CN); YU, Jiajia, Shenzhen, Guangdong 518129 (CN)
(74) Representative: Maiwald GmbH
(86) International application number: PCT/CN2024/071557
(87) International publication number: WO 2024/244480

(57) **Abstract**

The present disclosure provides an interface display method, which may be applied to a scenario such as coroutine/thread tuning. The method includes: displaying a first interface; and displaying a second interface in response to a first operation of a user on the first interface, where the first interface includes first running information of at least one coroutine, and the second interface includes second running information of a first coroutine on a thread among the at least one coroutine; or the first interface includes the second running information of the first coroutine on the thread among the at least one coroutine, and the second interface includes the first running information of the at least one coroutine. That is, quick switching/jumping between a coroutine interface and a thread interface for display can be implemented through the first operation of the user, so that the user can identify and locate a problematic coroutine/thread in depth at different layers (for example, in a user mode and a kernel mode).

## Description

### INTERFACE DISPLAY METHOD AND RELATED DEVICE

This application claims priority to Chinese Patent Application No. 202310611424.0, filed with the China National Intellectual Property Administration on May 26, 2023 and entitled "INTERFACE DISPLAY METHOD AND RELATED DEVICE", which is incorporated herein by reference in its entirety.

### TECHNICAL FIELD

The present disclosure relates to the field of computer technologies, and in particular, to an interface display method and a related device.

### BACKGROUND

As Moore's Law slows down, multi-core processors start to become mainstream. A common approach to better utilize computing power of the multi-core processors is to develop multithreaded programs. For improvement of service performance, a large quantity of concurrent threads may be set up in a service process. A plurality of concurrent threads are sequentially executed within time slices in a round-robin scheduling manner.

Currently, one thread can execute one or more coroutine tasks. Within a time slice of the thread, a plurality of coroutine tasks assigned to the thread are scheduled for execution. However, the life cycle of coroutines is short, and numerous coroutines are generated during running of an application.

Therefore, how to quickly locate a problematic coroutine/thread to avoid being overwhelmed by a large amount of profiling (profiling) information is a challenge faced by users.

### SUMMARY

The present disclosure provides an interface display method and a related device, to implement jumping between a coroutine interface and a thread interface for display, so that a user can identify and locate a problematic coroutine/thread in depth at different layers (for example, in a user mode and a kernel mode).

A first aspect of the present disclosure provides an interface display method. The method may be applied to a scenario such as coroutine/thread tuning. The method may be performed by an interface display device, or may be performed by a component (for example, a processor, a chip, or a chip system) of the interface display device. The method includes: displaying a first interface; and displaying a second interface in response to a first operation of a user on the first interface, where the first interface includes first running information of at least one coroutine, and the second interface includes second running information of a first coroutine on a thread among the at least one coroutine; or the first interface includes the second running information of the first coroutine on the thread among the at least one coroutine, and the second interface includes the first running information of the at least one coroutine. The at least one coroutine includes the first coroutine and another coroutine, or the at least one coroutine is the first coroutine.

In the present disclosure, quick switching/jumping between a coroutine interface and a thread interface for display can be implemented through the first operation, so that the user can identify and locate a problematic coroutine/thread in depth at different layers (for example, in a user mode and a kernel mode).

Optionally, in a possible implementation of the first aspect, the first running information includes at least one of the following: a quantity of the at least one coroutine, different states of the at least one coroutine at an application level, and duration of the different states.

In this possible implementation, the first running information includes related information such as a state of a coroutine and running duration of the corresponding state. In this step, time consumption of related coroutines in different states is viewed, and overhead information such as creation and scheduling of the coroutines is provided for a developer to identify a problematic coroutine (for example, a coroutine with a large granularity and high time consumption, a coroutine that remains unexecuted after creation, or a coroutine that is blocked for a long time).

Optionally, in a possible implementation of the first aspect, the second running information includes at least one of the following: kernel scheduling information of the thread corresponding to the first coroutine, and a first time slice of the thread corresponding to the first coroutine; the kernel scheduling information includes at least one of the following: different states of the thread that is corresponding to the first coroutine and that is in the kernel mode, duration of the different states, and information about a processor used by the thread corresponding to the first coroutine; and the first time slice is used to reflect a time projection of the first coroutine on the thread.

In this possible implementation, scheduling information of a coroutine in the user mode and scheduling information of a thread in the kernel mode are integrated for display, so that time during which the coroutine actually uses a kernel resource is more accurately analyzed.

Optionally, in a possible implementation of the first aspect, before the foregoing step of displaying the first interface, the method further includes: displaying a third interface, where the third interface includes processes of changes over time in quantities of a plurality of coroutines in different states at the application level; and displaying the first interface includes: displaying the first interface in response to a second operation of the user on the third interface.

In this possible implementation, execution of a coroutine is displayed hierarchically as overall coroutine running information of an application (namely, content displayed on the third interface), running information of a coroutine, and running information of a thread, thereby helping the developer quickly learn about macro and micro running of the application.

Optionally, in a possible implementation of the first aspect, the second operation is used to determine a first time interval selected in the third interface, and the first interface displays running information corresponding to the first time interval.

In this possible implementation, the user selects the first time interval, so that the first interface corresponding to the first time interval can be displayed. This helps the developer more accurately determine precise information about actual usage of a processor in a running time slice of the coroutine.

Optionally, in a possible implementation of the first aspect, before the foregoing step of displaying the first interface, the method further includes: obtaining performance analysis data in a running process of the application, where the performance analysis data is used to obtain the first running information and the second running information.

In this possible implementation, the performance analysis data obtained in the running process of the application can provide running information of a coroutine/thread, a summary of parallel running of the application, and the like for the user, so that the developer can view and analyze application-level coroutine information based on the performance analysis data.

Optionally, in a possible implementation of the first aspect, the first operation is an operation on the first coroutine in the first interface.

In this possible implementation, the user can view, through the first operation, a coroutine view or a thread view corresponding to a coroutine, so that the user can analyze or process a problem of a coroutine/thread from different perspectives, and therefore tuning efficiency is improved.

Optionally, in a possible implementation of the first aspect, the second interface is used for the user to perform problem analysis and processing on a coroutine/thread.

In this possible implementation, jumping between the thread view and the coroutine view is implemented by responding to the first operation of the user, and then a problem of the coroutine/thread is analyzed or processed based on different views, thereby improving the tuning efficiency.

A second aspect of the present disclosure provides an interface display device. The interface display device may be used in a scenario such as coroutine/thread tuning. The interface display device includes: a display unit, configured to display a first interface, where the display unit is further configured to display a second interface in response to a first operation of a user on the first interface; and the first interface includes first running information of at least one coroutine, and the second interface includes second running information of a first coroutine on a thread among the at least one coroutine; or the first interface includes the second running information of the first coroutine on the thread among the at least one coroutine, and the second interface includes the first running information of the at least one coroutine.

Optionally, in a possible implementation of the second aspect, the first running information includes at least one of the following: a quantity of the at least one coroutine, different states of the at least one coroutine at an application level, and duration of the different states.

Optionally, in a possible implementation of the second aspect, the second running information includes at least one of the following: kernel scheduling information of the thread corresponding to the first coroutine, and a first time slice of the thread corresponding to the first coroutine; the kernel scheduling information includes at least one of the following: different states of the thread that is corresponding to the first coroutine and that is in the kernel mode, duration of the different states, and information about a processor used by the thread corresponding to the first coroutine; and the first time slice is used to reflect a time projection of the first coroutine on the thread.

Optionally, in a possible implementation of the second aspect, the display unit is further configured to display a third interface, and the third interface includes processes of changes over time in quantities of a plurality of coroutines in different states at the application level; and that the display unit is configured to display the first interface includes: the display unit is specifically configured to display the first interface in response to a second operation of the user on the third interface.

Optionally, in a possible implementation of the second aspect, the second operation is used to determine a first time interval selected in the third interface, and the first interface displays running information corresponding to the first time interval.

Optionally, in a possible implementation of the second aspect, the interface display device further includes: an obtaining unit, configured to obtain performance analysis data in a running process of an application, where the performance analysis data is used to obtain the first running information and the second running information.

Optionally, in a possible implementation of the second aspect, the first operation is an operation on the first coroutine in the first interface.

Optionally, in a possible implementation of the second aspect, the second interface is used for the user to perform problem analysis and processing on a coroutine/thread.

A third aspect of the present disclosure provides an interface display device, including a processor, where the processor is coupled to a memory, the memory is configured to store a program or instructions, and when the program or the instructions are executed by the processor, the interface display device is enabled to implement the method in the first aspect or any possible implementation of the first aspect.

A fourth aspect of the present disclosure provides a computer-readable medium, where the computer-readable medium stores a computer program or instructions, and when the computer program or the instructions are run on a computer, the computer is enabled to perform the method in the first aspect or any possible implementation of the first aspect.

A fifth aspect of the present disclosure provides a computer program product, where when the computer program product is executed on a computer, the computer is enabled to perform the method in the first aspect or any possible implementation of the first aspect.

A sixth aspect of the present disclosure further provides a chip system, where the chip system includes at least one processor, configured to support the interface display device in implementing functions in the first aspect or any one of the possible implementations of the first aspect.

In a possible design, the chip system may further include a memory. The memory is configured to store program instructions and data that are necessary for the interface display device. The chip system may include a chip, or may include a chip and another discrete component. Optionally, the chip system further includes an interface circuit, and the interface circuit provides program instructions and/or data for the at least one processor.

For technical effects brought by the second aspect, the third aspect, the fourth aspect, the fifth aspect, the sixth aspect, or any possible implementation thereof, refer to technical effects brought by the first aspect or different possible implementations of the first aspect. Details are not described herein again.

It can be seen from the foregoing technical solutions that the present disclosure has the following advantages: After the first interface is displayed, the second interface is displayed in response to the first operation of the user on the first interface. Running information of a coroutine is on the first interface, and running information of a thread corresponding to the coroutine is on the second interface; or the running information of the thread corresponding to the coroutine is on the first interface, and the running information of the coroutine is on the second interface. Therefore, jumping between a coroutine interface and a thread interface for display can be implemented through the first operation, so that the user can identify and locate a problematic coroutine/thread in depth at different layers (for example, in a user mode and a kernel mode).

### BRIEF DESCRIPTION OF DRAWINGS

FIG. 1 is a diagram of a structure of a system architecture according to the present disclosure;
FIG. 2 is a diagram of a process of program tuning and observation according to the present disclosure;
FIG. 3 is a schematic flowchart of an interface display method according to the present disclosure;
FIG. 4A is an example diagram of a first interface according to the present disclosure;
FIG. 4B is another example diagram of a first interface according to the present disclosure;
FIG. 5A is an example diagram of a first operation according to the present disclosure;
FIG. 5B is another example diagram of a first operation according to the present disclosure;
FIG. 6A is an example diagram of a second interface according to the present disclosure;
FIG. 6B is another example diagram of a second interface according to the present disclosure;
FIG. 7 is another schematic flowchart of an interface display method according to the present disclosure;
FIG. 8 is an example diagram of a third interface according to the present disclosure;
FIG. 9 is an example diagram of a second operation according to the present disclosure;
FIG. 10 is a diagram of a structure of an interface display device according to the present disclosure; and
FIG. 11 is a diagram of another structure of an interface display device according to the present disclosure.

### DESCRIPTION OF EMBODIMENTS

The present disclosure provides an interface display method and a related device, to implement jumping between a coroutine interface and a thread interface for display, so that a user can identify and locate a problematic coroutine/thread in depth at different layers (for example, in a user mode and a kernel mode).

For ease of understanding, the following first describes related terms and concepts that are mainly involved in the present disclosure.

### 1. Process

A process may be a running activity of a program having a specific independent function, and is a carrier for running an application. It may be also understood as that the process is a running instance of the application, and is a dynamic execution of the application. For example, when a user runs Notepad (Notepad) program, the user creates a process used to contain code that constitutes Notepad.exe and contain a dynamic link library that Notepad.exe needs to invoke. A process is an independent unit for a system to allocate and schedule resources. Each process has its own memory space, and different processes are independent of each other. When a process runs in kernel space, the process is in a kernel mode; and when the process runs in user space, the process is in a user mode. Specifically, an instruction (for example, a system call instruction) enables the process to enter the kernel mode from the user mode.

### 2. Thread

Threads are included in a process and created in the process, and can share resources of the process. One process includes at least one thread. A thread is a basic unit for a system to allocate time resources of a processor, or a thread is a unit that is independently executed in a process. Threads are concurrent. In other words, a plurality of concurrent threads can be executed in a single process, the threads share memory space of the process, and the threads concurrently execute different tasks. For example, one thread may be used to write a file into a disk, and another thread may be used to receive a button operation of a user and respond in a timely manner. The threads do not interfere with each other.

In a computer system, a thread is a basic unit for task scheduling and executing for a processor, and is scheduled by a kernel of an operating system.

### 3. Coroutine

A coroutine, also referred to as a user-mode lightweight thread, can be referred to as a task (Task), a job (job), or the like. Scheduling of the coroutine is entirely controlled and completed in a user mode, and is finally scheduled to a kernel thread of an operating system to complete running. The coroutine is not intended to replace a thread, but requires the thread to host running of the coroutine. In other words, the thread is a carrier of the coroutine. A plurality of coroutines can share one thread.

### 4. Hierarchical display of coroutines

Hierarchical display of coroutines means displaying runtime information of the coroutines at a plurality of levels, such as overall statistics information, thread-level information, and coroutine-level information.

### 5. Performance analysis (Profiling)

Profiling refers to collecting runtime information of a program in a running process of the program to analyze where running time of the program is mainly consumed, thereby effectively optimizing running efficiency of the program.

Before the method and the related device in the present disclosure are described with reference to the accompanying drawings, a system architecture provided in the present disclosure is first described.

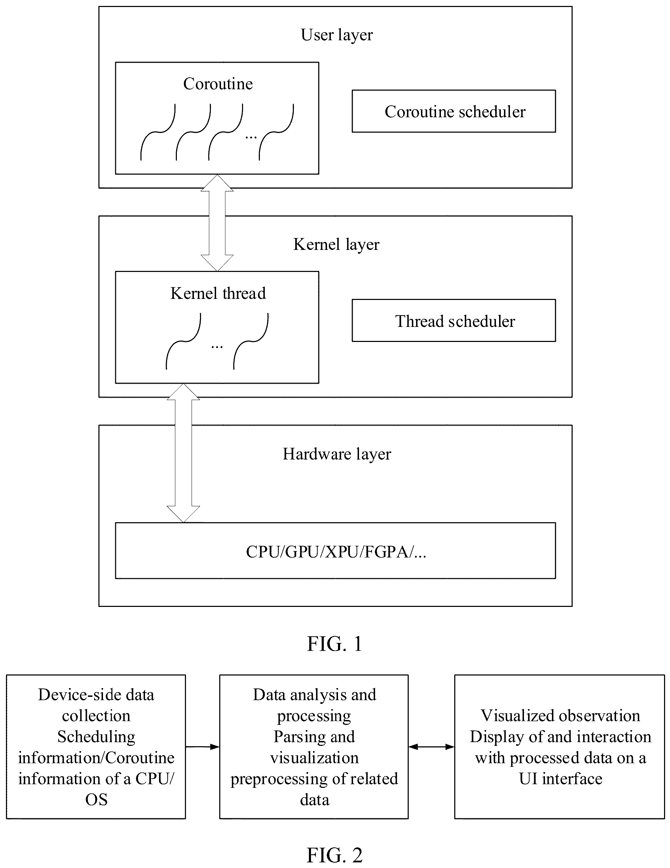

Refer to FIG. 1. An embodiment of the present invention provides a system architecture. The system architecture includes three layers: a user layer, a kernel layer, and a hardware layer.

The user layer includes at least one coroutine and a coroutine scheduler for scheduling the at least one coroutine. The kernel layer includes at least one kernel thread and a kernel scheduler for scheduling the at least one kernel thread. The hardware layer includes a processor, a field programmable gate array (field program gate way, FPGA), and the like. The processor may include at least one of the following: XPUs such as a central processing unit (central processing unit, CPU), a graphics processing unit (graphics processing unit, GPU), a neural-network processing unit (neural-network processing unit, NPU), a tensor processing unit (tensor processing unit, TPU), and the like. The coroutine scheduler determines an order in which coroutines run (each thread can run one coroutine at a time). The thread scheduler is an operating system service, responsible for allocating CPU time to a thread in a runnable (Runnable) state.

When the at least one coroutine is a plurality of coroutines, the plurality of coroutines share a time slice allocated by an operating system to the thread, to fully utilize hardware (for example, a CPU).

It may be understood that the user layer may also be referred to as a user mode, user space, or the like, the kernel layer may also be referred to as a kernel mode, kernel space, or the like, and the hardware layer may also be referred to as a hardware execution unit or the like.

In addition, FIG. 2 shows a process in which a user performs tuning and observation on a program. The process includes device-side data collection, data analysis and processing, and visualized observation.

Device-side data collection mainly includes collecting scheduling information, coroutine information, and the like of a CPU/operating system (Operating System, OS). Data analysis and processing mainly include performing parsing, visualization preprocessing (for example, format adjustment, data pairing and completion, and statistics collection and computing of information), and the like on the collected data. Visualized observation mainly includes display of the processed data on a user interface (user interface, UI), interaction with a user through the UI interface, and the like. The interface display method according to the present disclosure is mainly applied to the foregoing visualized observation procedure.

Current mainstream modern languages support coroutines, including Go, Kotlin, C++20, Rust, Swift, and the like. Scenarios in which coroutines are used for development are very common, including terminal application scenarios such as mobile phones or tablet computers, communication and computing application scenarios, and cloud service application scenarios. Currently, coroutine tuning is still performed in a conventional tuning manner, and there is a lack of capability to efficiently observe and analyze a coroutine in depth. Consequently, when a developer analyzes coroutine-level issues, it is difficult to identify a problem, analysis accuracy is low, and capabilities of association and interaction between threads and coroutines are weak, resulting in low tuning efficiency and poor tuning experience.

To resolve the foregoing technical problem, the present disclosure provides an interface display method, to provide a capability to quickly switch/jump between a thread view and a coroutine view and therefore enable a user to identify and locate a problem in a coroutine in depth level by level. Specifically, after a first interface is displayed, a second interface is displayed in response to a first operation of a user on the first interface. Running information of a coroutine is on the first interface, and running information of a thread corresponding to the coroutine is on the second interface; or the running information of the thread corresponding to the coroutine is on the first interface, and the running information of the coroutine is on the second interface. Therefore, jumping between a coroutine interface and a thread interface for display can be implemented through the first operation, so that the user can identify and locate a problematic coroutine/thread in depth at different layers (for example, in a user mode and a kernel mode).

The following describes the interface display method according to the present disclosure. The method may be performed by an interface display device, or may be performed by a component (for example, a processor, a chip, or a chip system) of the interface display device. The interface display device may be a server, or may be a terminal device. Certainly, the method may alternatively be performed by a system including the server and the terminal device. The method may be applied to a scenario such as coroutine/thread tuning.

The interface display device in the present disclosure may be a server or a terminal device. The server may be a cloud server, a network server, an application server, a management server, or the like. The terminal device may be a digital display product such as a mobile phone (for example, a mobile phone with a foldable display or a mobile phone without a foldable display), a tablet computer (pad), a portable game console, a personal digital assistant (personal digital assistant, PDA), a notebook computer, an ultra-mobile personal computer (ultra-mobile personal computer, UMPC), a handheld computer, a netbook, an in-vehicle media playback device, a wearable electronic device, a virtual reality (virtual reality, VR) terminal device, or an augmented reality (augmented reality, AR) terminal device.

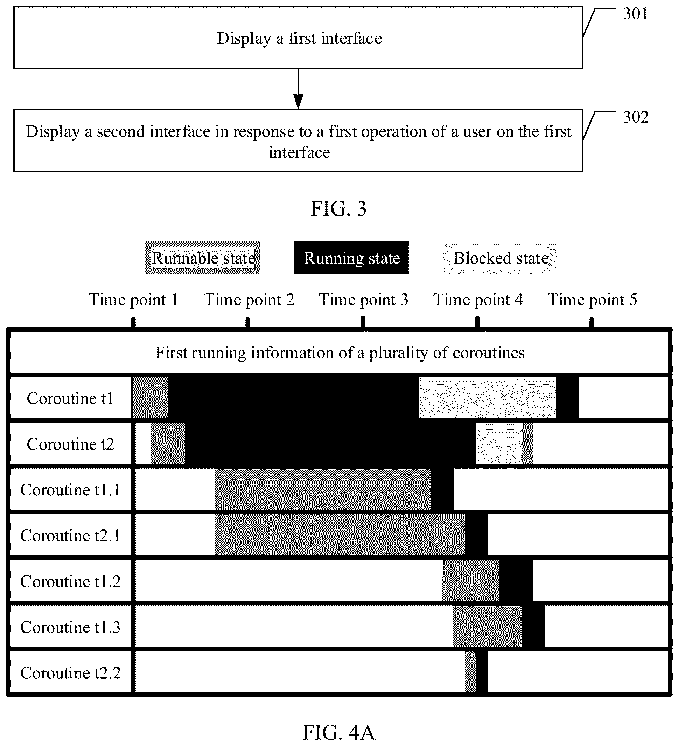

FIG. 3 is a schematic flowchart of an interface display method according to the present disclosure. The method may include step 301 and step 302.

Step 301: Display a first interface.

In the present disclosure, an interface display device displays the first interface. The first interface may be an interface of tuning for an application installed in the interface display device, or an interface of tuning that is for an application installed in another device and that is on the electronic device, or the like. This is not specifically limited herein.

In a possible implementation, the first interface includes first running information of at least one coroutine (the first interface in this case may also be understood as a coroutine view). The first running information includes at least one of the following: a quantity of the at least one coroutine, different states of the at least one coroutine at an application level, duration of the different states, and the like. The at least one coroutine includes a first coroutine and another coroutine, or the at least one coroutine is the first coroutine.

The states may include at least one of the following: a runnable state, a running state, a blocked state, and the like. A coroutine in the runnable state may be understood as a coroutine that is to be run. A coroutine in the running state may be understood as a coroutine that is running. A coroutine in the blocked state may be understood as a coroutine that encounters difficulty in running, abnormal scheduling, or the like. In the present disclosure, names and meanings of the states may be set according to an actual requirement. This is not specifically limited herein.

Example 1: The first interface in this case may be as shown in FIG. 4A, and the first interface includes first running information of at least one coroutine. The at least one coroutine shown in FIG. 4A includes t1 and t2. t1 includes sub-coroutines t1.1, t1.2, and t1.3. T2 includes sub-coroutines t2.1 and t2.2. Alternatively, it is understood as that the coroutine t1 depends on running results of the sub-coroutines t1.1, t1.2, and t1.3, and the coroutine t2 depends on execution results of the sub-coroutines t2.1 and t2.2. For the coroutines t1 and t2, different states (for example, a runnable state, a running state, and a blocked state in FIG. 4A) and duration corresponding to the different states are displayed.

It may be understood that FIG. 4A is merely an example. In actual application, the first interface may alternatively include first running information of one coroutine.

In another possible implementation, the first interface includes second running information of a first coroutine on a thread among at least one coroutine (the first interface in this case may also be understood as a thread view). The second running information includes at least one of the following: kernel scheduling information of the thread corresponding to the first coroutine, a first time slice of the thread corresponding to the first coroutine, load of the thread executing a coroutine, and the like. The at least one coroutine includes the first coroutine and another coroutine, or the at least one coroutine is the first coroutine.

The kernel scheduling information includes at least one of the following: different states of the thread that is corresponding to the first coroutine and that is in a kernel mode, duration of the different states, information about a processor used by the thread corresponding to the first coroutine, and the like. The information about the processor may be hardware information (for example, a frequency, a model, a number, and a big/little core identifier) of the processor, running duration of the processor, or the like.

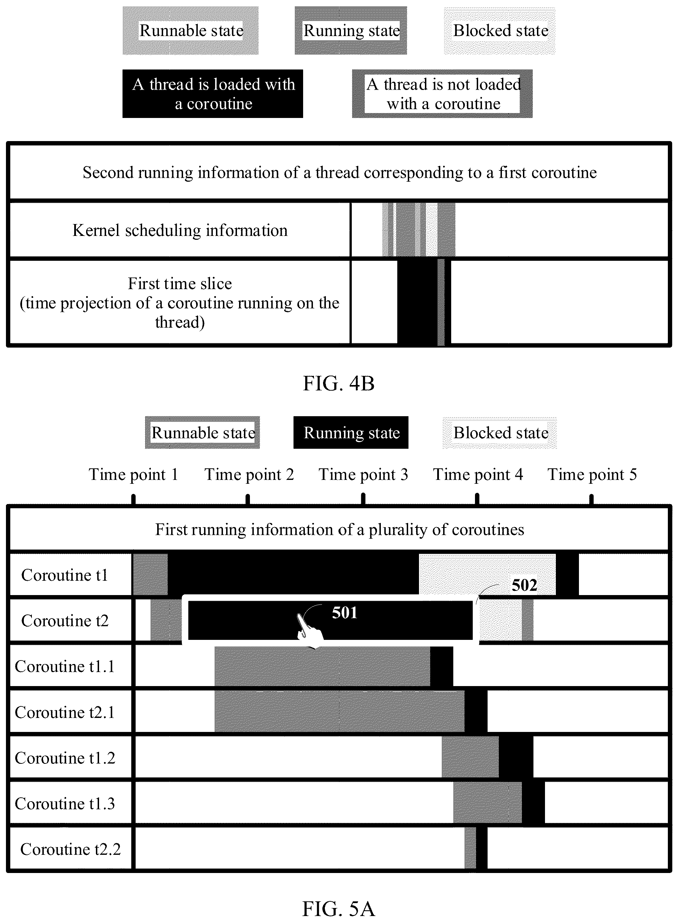

Example 2: The first interface in this case may be as shown in FIG. 4B, and the first interface includes second running information of a first coroutine on a thread among at least one coroutine. The first interface shown in FIG. 4B includes kernel scheduling information of the thread and a first time slice of the thread (or understood as a time projection of one or more coroutines running on the thread, load of the thread executing a coroutine, or the like). The first time slice of the thread may be corresponding to at least one coroutine (including the first coroutine). The kernel scheduling information displays states (for example, a runnable state, a running state, and a blocked state in FIG. 4B) of the corresponding thread and duration (not shown in FIG. 4B) corresponding to the different states. The first time slice includes two states (for example, a state in which the thread is loaded with a coroutine, and a state in which the thread is not loaded with a coroutine in FIG. 4B).

Step 302: Display a second interface in response to a first operation of a user on the first interface.

After the interface display device displays the first interface, the user may perform the first operation on the first interface. Correspondingly, the interface display device displays the second interface in response to the first operation of the user on the first interface. The user may be a user, a user, or the like of software. This is not specifically limited herein. The first interface and/or the second interface may be used for the user to perform problem analysis and processing on a coroutine/thread.

The user in the present disclosure may be a user, a developer, an operation and maintenance personnel, or the like of a program. This is not specifically limited herein.

In a possible implementation, the second interface includes second running information of the first coroutine on a thread among the at least one coroutine. In another possible implementation, the second interface includes first running information of the at least one coroutine. For descriptions of the first running information and the second running information, refer to the descriptions in step 301. Details are not described herein again.

When the first interface is a coroutine view, the first operation is an operation on the first coroutine in the first interface. When the first interface is a thread view, the first operation is an operation on the time slice of the thread in the first interface.

An operation (for example, the first operation or a subsequent second operation) in the present disclosure may be a touch operation, a voice operation, an air operation, or the like on a display interface. This is not specifically limited herein.

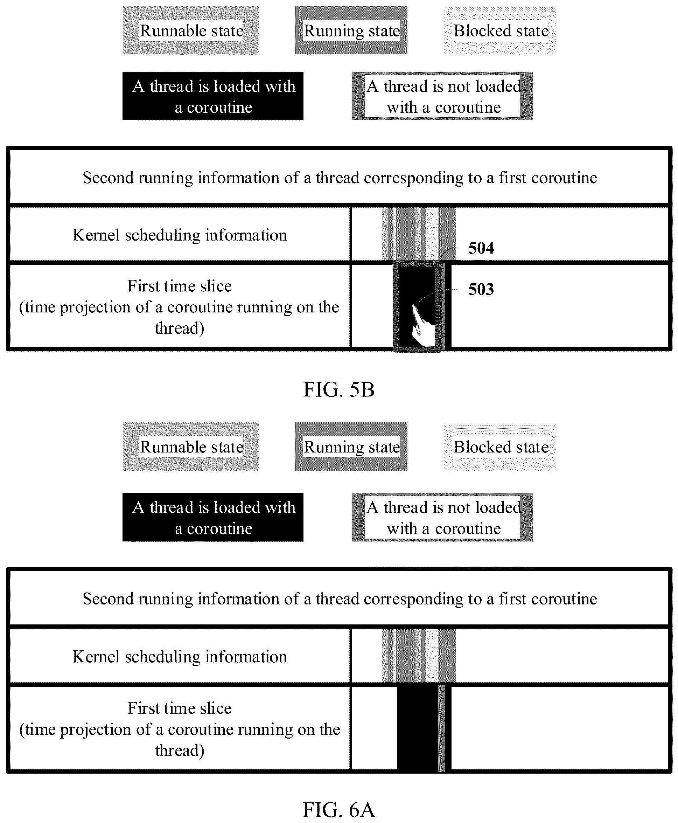

For example, in continuation of Example 1, the interface display device displays the first interface shown in FIG. 4A. The user observes that the coroutine t2 is in the running state for a long time, and expects to further learn about running of the coroutine t2 on a thread. As shown in FIG. 5A, the user may perform a tap operation (for example, an operation 501) or a select operation (for example, an operation 502) on the running state of the coroutine t2 in the first interface. The interface display device displays a second interface shown in FIG. 6A in response to the operation of the user. The second interface is used to display second running information of the thread that the coroutine t2 is on. In FIG. 6A, one swimlane shows kernel scheduling of the thread, and the other swimlane shows the first time slice (or understood as a time projection of a coroutine running on the thread, load of the thread executing a coroutine, or the like). That is, the user may view, at a thread level on the second interface, execution of the coroutine actually using a CPU, view the first time slice of the thread that the coroutine t2 is on, and view kernel scheduling and running information of the thread in the first time slice, to further obtain time during which the coroutine t2 actually uses the CPU (namely, the running state shown in FIG. 6A).

In Example 1, a user may view time consumption of the coroutines in the different states, and overhead information such as creation and scheduling of the coroutines is provided for the user to identify a problematic coroutine (for example, a coroutine with a large granularity and high time consumption, a coroutine that remains unexecuted after creation, or a coroutine that is blocked for a long time). In addition, jumping through an interval of a running state of a coroutine to display of the coroutine on thread load is provided. Additionally, a capability to display visualized coroutine-level information as required may be further provided. As a result, the user can focus on and analyze a live coroutine in a specific time interval through an approach such as selecting a time period or filtering by service name, to perform more detailed analysis on running of the coroutines.

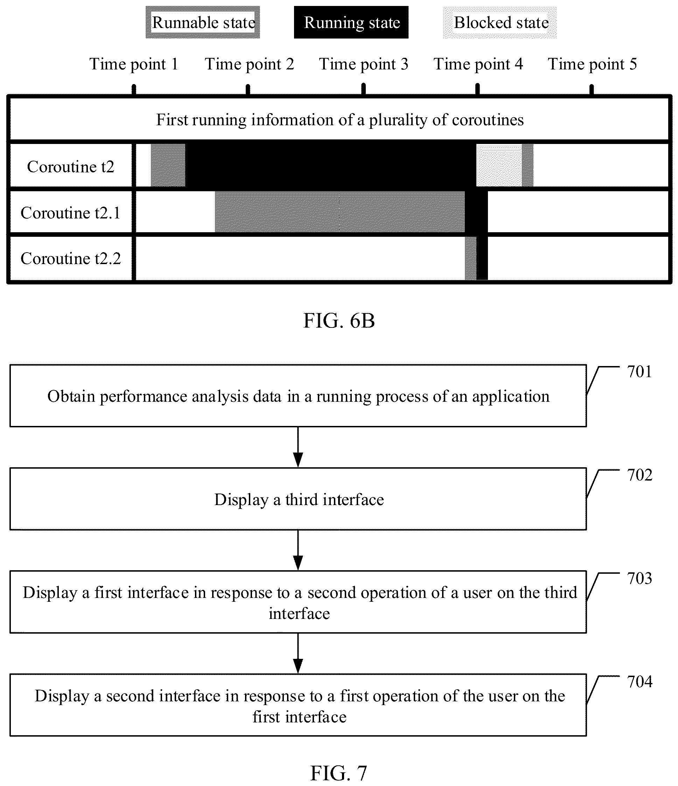

For example, in continuation of Example 2, the interface display device displays the first interface shown in FIG. 4B. The user may view, on the first interface shown in FIG. 4B, the kernel scheduling information of the thread and duration (not shown in the figure) for which the thread is loaded with or is not loaded with a coroutine. As shown in FIG. 5B, the user performs a tap operation (for example, an operation 503) or a select operation (for example, an operation 504) on the state in which the thread is loaded with a coroutine. In response to the operation of the user, the interface display device determines that the first coroutine is t2 and displays a second interface shown in FIG. 6B. The second interface includes first running information (for example, a quantity of coroutines, different states of the coroutines, and duration of the different states) of the coroutine t2 loaded on the thread and first running information of sub-coroutines (t2.1 and t2.2) of the coroutine t2. Certainly, FIG. 6B is merely an example of the second interface. In actual application, FIG. 6B may display only running information of the first coroutine, or may display the running information of the first coroutine and running information of a sub-coroutine corresponding to the first coroutine, or may display running information of coroutines close to each other on a timeline, running information of coroutines with similar priorities, running information of coroutines with similar coroutine identifiers, or the like. This is not specifically limited herein.

It may be understood that FIG. 5B is merely an example of interaction. In actual application, the interface display device may further provide, for the user based on FIG. 5B, specific coroutines corresponding to the first time slice, then determine the first coroutine based on the select operation of the user, and display the running information of the first coroutine. For example, the first operation includes a move operation and a select operation. When the user moves a mouse to the first time slice, that the first time slice is corresponding to the coroutine t2 and another coroutine is added on the interface, and then the interface displays running information of t2 in response to an operation of the user selecting t2.

In addition, the first interface and/or the second interface are/is used for the user to perform problem analysis and processing on a coroutine/thread.

For a status of the thread, the user may perform the following analysis and processing through the first interface and/or the second interface: load of the thread (for example, a quantity of coroutines and a scheduling throughput of the coroutines), whether a priority of the thread meets a quality of service (Quality of Service, QoS) or network service level agreement (Service Level Agreement, SLA) requirement, and the like.

For a status of the coroutine, the user may perform the following analysis and processing through the first interface and/or the second interface: whether a ratio of actual execution duration of the coroutine to a life cycle of the coroutine is excessively small, and whether running duration of the coroutine is excessively long.

In addition, the first interface and the second interface may share a timeline. That is, the user may observe running information, tuning information, and the like through the timeline shared by the coroutine view and the thread view.

According to the interface display method provided in the present disclosure, in one aspect, a capability to quickly switch/jump between the thread view and the coroutine view is provided. This helps the user quickly switch between a thread level and a coroutine level when observing running information of a coroutine, preventing the user from being overwhelmed by a large amount of coroutine information and helping the user identify and locate a problem in a coroutine in depth level by level. In another aspect, the thread view includes kernel scheduling information of a thread, and scheduling and execution information of a coroutine on the thread. That is, effective running time of the coroutine can be accurately displayed through integrated display of the kernel scheduling information of the thread and scheduling information of the coroutine in a user mode, thereby helping the user further analyze and locate a problematic coroutine. As a result, time during which the coroutine actually uses a resource of the CPU is more accurately analyzed. Jumping between the coroutine interface and the thread interface for display can be implemented through the first operation, so that the user can identify and locate a problematic coroutine/thread in depth at different layers (for example, in a user mode and a kernel mode).

In addition, in the foregoing coroutine view, a single running time slice of a coroutine and a running time slice of time of a thread for executing the coroutine can be further integrated for display, thereby helping the user more accurately determine precise information about actual CPU usage in a running time slice of the coroutine. In the coroutine view, a single running time slice of a coroutine, and a priority and quality of service that are of a thread for executing the coroutine can also be associated for display, thereby helping the user accurately determine whether information such as a running priority and quality of service of a coroutine task of the coroutine meets expectations.

The foregoing thread view can help the user quickly view load and utilization of a thread executing a coroutine, to further identify a potential problem. The thread view displays scheduling and running information of a thread that actually executes a coroutine and that is in a kernel mode. Therefore, information such as a frequency and heterogeneous big and little cores of the CPU is combined, so that running of the coroutine on the thread can be analyzed more accurately. In addition, a capability to jump through a time slice of the coroutine on the thread to a life cycle of the coroutine is provided.

Further, the interface display device may display application-level coroutine statistics information. The following describes in detail with reference to FIG. 7. The procedure may include step 701 to step 704.

Step 701: Obtain performance analysis data in a running process of an application.

In the present disclosure, the interface display device obtains the performance analysis data in a plurality of manners. The present disclosure merely uses the interface display device collecting the performance analysis data as an example for description. It may be understood that, in actual application, the interface display device may alternatively obtain the performance analysis data by receiving the performance analysis data sent by another device, or selecting the performance analysis data from a database, or the like. This is not specifically limited herein.

The interface display device obtains the performance analysis data in the running process of the application, where the performance analysis data is used to obtain running information of a coroutine and running information of a thread corresponding to the coroutine. For example, the performance analysis data is used to obtain the first running information and the second running information in the embodiment shown in FIG. 3. For descriptions of the first running information and the second running information, refer to the descriptions in the embodiment shown in FIG. 3. Details are not described herein again.

The performance analysis data may be understood as application profiling information. In addition, the performance analysis data may directly include the first running information and the second running information. Alternatively, a small part of data may be first obtained, and then processing (for example, supplementation, restoration, statistics collection, or completion) may be performed on the small part of data to obtain the first running information and the second running information.

For example, pseudocode of a coroutine program is as follows:

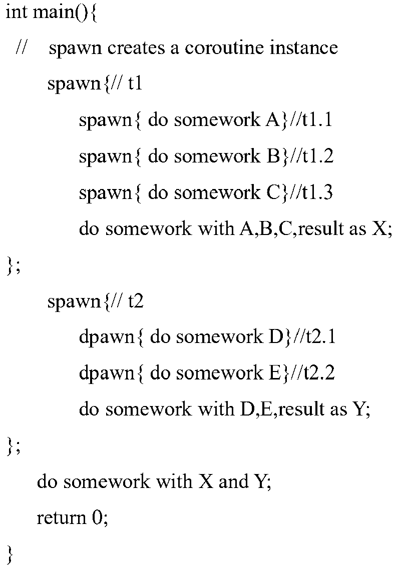

A main function creates two coroutines t1 and t2. t1 creates three coroutines t1.1, t1.2, and t1.3. t2 creates two coroutines t2.1 and t2.2. These coroutines can be executed concurrently. Because t1 depends on running results of t1.1, t1.2, and t1.3, and t2 depends on execution results of t2.1 and t2.2, ultimately, the main function depends on computing results of t1 and t2.

Step 702: Display a third interface.

The interface display device may display a third interface, where the third interface includes processes of changes over time in quantities of a plurality of coroutines in different states at the application level.

Optionally, the user may quickly observe concurrent execution of coroutines through the third interface, and identify a time interval in which there is a potential coroutine concurrency problem, and the like.

Optionally, information displayed in the third interface may be obtained by processing the profiling information in step 701. For example, the profiling information is imported into a tuning tool for visualized display. For example, after the developer imports the profiling information, running of a selected coroutine at a coroutine level is displayed on an interface as required based on overall running of the application of the coroutine and through filtering by capability.

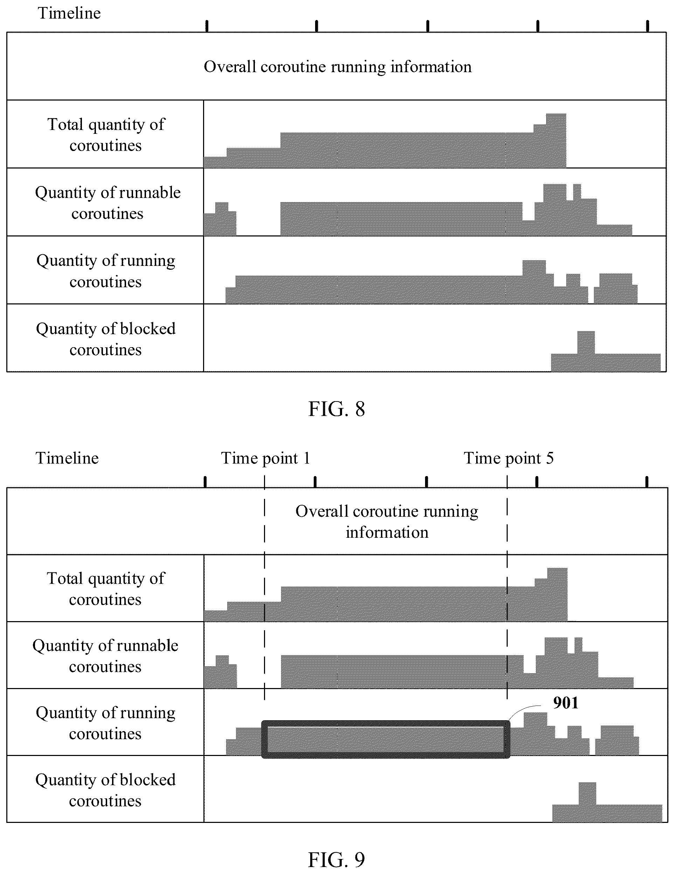

For example, the third interface displayed by the interface display device is shown in FIG. 8. The third interface includes processes of changes over time in quantities of a plurality of coroutines in different states at the application level. Overall coroutine running shown in FIG. 8 includes a process of a change over time in a total quantity of coroutines, a process of a change over time in a quantity of runnable coroutines, a process of a change over time in a quantity of running coroutines, and a process of a change over time in a quantity of blocked coroutines. To facilitate analysis of a problem of a coroutine/thread, there may be a timeline above swimlanes in FIG. 8, and the timeline may be shared. In other words, when data is observed at different levels (for example, an application level, a thread level, and a coroutine level), the same timeline is used.

Step 703: Display a first interface in response to a second operation of a user on the third interface.

After the interface display device displays the third interface to the user, the user may perform the second operation on the third interface. Correspondingly, the interface display device displays the first interface in response to the second operation of the user on the third interface.

The second operation is used to determine a first time interval selected in the third interface. It may be understood that the second operation may be an operation such as a select operation or an operation of inputting a time interval. This is not specifically limited herein.

For example, in continuation of the example in FIG. 8, the user discovers that a quantity of running coroutines in FIG. 8 remains unchanged for a long period of time. In other words, a concurrency degree is not increased.

As shown in FIG. 9, the user performs a select operation (for example, an operation 901) on a running coroutine. A first time interval from a time point 1 to a time point 5 is selected. The interface display device displays the first interface shown in FIG. 4A in response to the operation of the user. Then, the user can view time consumption of related coroutines in different states on the first interface shown in FIG. 4A, and overhead information such as creation and scheduling of the coroutines is provided for the user to identify a problematic coroutine (for example, a coroutine with a large granularity and high time consumption, a coroutine that remains unexecuted after creation, or a coroutine that is blocked for a long time).

It may be understood that, the user viewing the coroutine view through the second operation on the third interface in the foregoing example is merely an example. In actual application, the user may alternatively display the thread view or the like through an operation on the third interface. This is not limited herein.

Step 704: Display a second interface in response to a first operation of the user on the first interface.

Step 704 is similar to step 302 in the foregoing embodiment, and details are not described herein again.

The embodiment shown in FIG. 7 may be understood as being before step 301 in the embodiment shown in FIG. 3, and the interface display device may further obtain the performance analysis data and display the third interface. In addition, step 301 is specifically: display the first interface in response to the second operation of the user on the third interface.

The third interface allows the user to analyze a problem of a thread or a coroutine, for example, whether a concurrency degree of coroutines meets an expectation, or a quantity of runnable coroutines remains high for a long time.

In this embodiment, the user can view overall running of a coroutine through the third interface. In one aspect, the user can view a problem such as the concurrency degree of the coroutines through the third interface. In another aspect, the user can further implement, through the second operation, jumping from the third interface to the coroutine view/thread view, to view the problem of the coroutine/thread at a plurality of levels. In another aspect, execution of a coroutine is displayed hierarchically in a hierarchical relationship among overall running of the application, scheduling of a coroutine in the user mode and a thread in the kernel mode, and coroutine-level running, thereby helping the developer quickly learn about macro and micro running of the application.

The foregoing describes the interface display method in the present disclosure, and the following describes the interface display device in the present disclosure. The interface display device may be a terminal device, a server, or the like. This is not specifically limited herein.

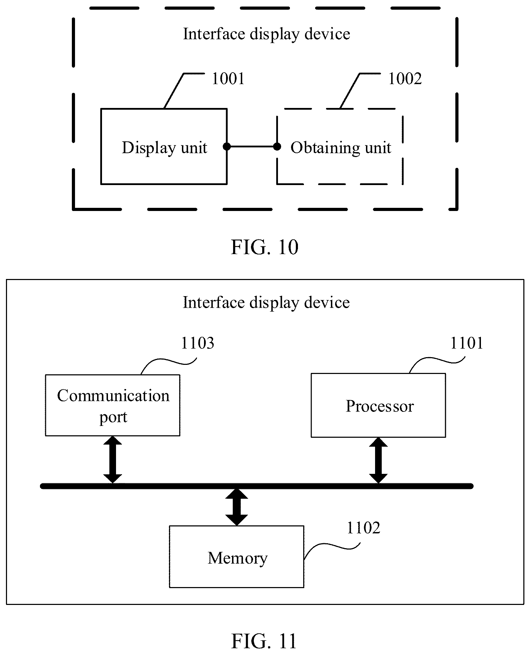

Refer to FIG. 10. An embodiment of the interface display device in the present disclosure includes:
a display unit 1001, configured to display a first interface, where
the display unit 1001 is further configured to display a second interface in response to a first operation of a user on the first interface; and
the first interface includes first running information of at least one coroutine, and the second interface includes second running information of a first coroutine on a thread among the at least one coroutine; or
the first interface includes the second running information of the first coroutine on the thread among the at least one coroutine, and the second interface includes the first running information of the at least one coroutine.

Optionally, the first running information includes at least one of the following: a quantity of the at least one coroutine, different states of the at least one coroutine at an application level, and duration of the different states.

Optionally, the second running information includes at least one of the following: kernel scheduling information of the thread corresponding to the first coroutine, and a first time slice of the thread corresponding to the first coroutine; the kernel scheduling information includes at least one of the following: different states of the thread that is corresponding to the first coroutine and that is in a kernel mode, duration of the different states, and information about a processor used by the thread corresponding to the first coroutine; and the first time slice is used to reflect a time projection of the first coroutine on the thread.

Optionally, the display unit 1001 is further configured to display a third interface, and the third interface includes processes of changes over time in quantities of a plurality of coroutines in different states at the application level; and that the display unit 1001 is configured to display the first interface includes: the display unit 1001 is specifically configured to display the first interface in response to a second operation of the user on the third interface.

Optionally, the second operation is used to determine a first time interval selected in the third interface, and the first interface displays running information corresponding to the first time interval.

Optionally, the interface display device further includes: an obtaining unit 1002, configured to obtain performance analysis data in a running process of an application, where the performance analysis data is used to obtain the first running information and the second running information.

Optionally, the first operation is an operation on the first coroutine in the first interface.

Optionally, the second interface is used for the user to perform problem analysis and processing on a coroutine/thread.

In this embodiment, operations performed by units in the interface display device are similar to those described in the embodiments shown in FIG. 1 to FIG. 9. Details are not described herein again.

In this embodiment, quick switching/jumping between a coroutine interface and a thread interface for display can be implemented by the display unit 1001 through the first operation of the user, so that the user can identify and locate a problematic coroutine/thread in depth at different layers (for example, in a user mode and a kernel mode).

FIG. 11 is a diagram of a structure of another interface display device according to the present disclosure. The interface display device may include a processor 1101, a memory 1102, and a communication port 1103. The processor 1101, the memory 1102, and the communication port 1103 are interconnected through a line. The memory 1102 stores program instructions and data.

The memory 1102 stores program instructions and data that are corresponding to the steps performed by the interface display device in the foregoing implementations corresponding to FIG. 1 to FIG. 9.

The processor 1101 is configured to perform the steps performed by the interface display device in any one of the embodiments shown in FIG. 1 to FIG. 9.

The communication port 1103 may be configured to receive and send data, and is configured to perform steps related to obtaining in any one of the embodiments shown in FIG. 1 to FIG. 9.

In an implementation, the interface display device may include more or fewer components than the interface display device in FIG. 11. This is merely an example for description and is not limited in the present disclosure.

The present disclosure further provides a computer-readable storage medium storing one or more computer-executable instructions. When the computer-executable instructions are executed by a processor, the processor performs the method in the possible implementations of the interface display device in the foregoing embodiments.

The present disclosure further provides a computer program product (or referred to as a computer program) storing one or more computers. When the computer program product is executed by a processor, the processor performs the method in the possible implementations of the interface display device.

The present disclosure further provides a chip system. The chip system includes at least one processor, configured to support functions in the possible implementations of the foregoing interface display device. Optionally, the chip system further includes an interface circuit, and the interface circuit provides program instructions and/or data for the at least one processor. In a possible design, the chip system may further include a memory. The memory is configured to store program instructions and data that are necessary for the interface display device. The chip system may include a chip, or may include a chip and another discrete component.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in the present disclosure, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of the present disclosure may be integrated into one processing unit, or each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a computer-readable storage medium. Based on such an understanding, the technical solutions of the present disclosure essentially, or the part contributing to the prior art, or all or some of the technical solutions may be implemented in the form of software product. The computer software product is stored in a storage medium and includes several instructions for instructing a computer device (which may be a personal computer, a server, or a network device) to perform all or some of the steps of the methods described in embodiments of the present disclosure. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. An interface display method, wherein the method comprises:
displaying a first interface; and
displaying a second interface in response to a first operation of a user on the first interface, wherein
the first interface comprises first running information of at least one coroutine, and the second interface comprises second running information of a first coroutine on a thread among the at least one coroutine; or
the first interface comprises the second running information of the first coroutine on the thread among the at least one coroutine, and the second interface comprises the first running information of the at least one coroutine; and the first coroutine is determined based on the first operation.

2. The method according to claim 1, wherein the first running information comprises at least one of the following: a quantity of the at least one coroutine, different states of the at least one coroutine at an application level, and duration of the different states.

3. The method according to claim 1 or 2, wherein the second running information comprises at least one of the following: kernel scheduling information of the thread corresponding to the first coroutine, and a first time slice of the thread corresponding to the first coroutine; the kernel scheduling information comprises at least one of the following: different states of the thread that is corresponding to the first coroutine and that is in a kernel mode, duration of the different states, and information about a processor used by the thread corresponding to the first coroutine; and the first time slice is used to reflect a time projection of the first coroutine on the thread.

4. The method according to any one of claims 1 to 3, wherein before displaying the first interface, the method further comprises:
displaying a third interface, wherein the third interface comprises processes of changes over time in quantities of a plurality of coroutines in different states at the application level; and
displaying the first interface comprises:
displaying the first interface in response to a second operation of the user on the third interface.

5. The method according to claim 4, wherein the second operation is used to determine a first time interval selected in the third interface, and the first interface displays running information corresponding to the first time interval.

6. The method according to any one of claims 1 to 5, wherein before displaying the first interface, the method further comprises:
obtaining performance analysis data in a running process of an application, wherein the performance analysis data is used to obtain the first running information and the second running information.

7. The method according to any one of claims 1 to 6, wherein the first operation is an operation on the first coroutine in the first interface.

8. The method according to any one of claims 1 to 7, wherein the second interface is used for the user to perform problem analysis and processing on a coroutine/thread.

9. An interface display device, wherein the interface display device comprises:
a display unit, configured to display a first interface, wherein
the display unit is further configured to display a second interface in response to a first operation of a user on the first interface; and
the first interface comprises first running information of at least one coroutine, and the second interface comprises second running information of a first coroutine on a thread among the at least one coroutine; or
the first interface comprises the second running information of the first coroutine on the thread among the at least one coroutine, and the second interface comprises the first running information of the at least one coroutine.

10. The interface display device according to claim 9, wherein the first running information comprises at least one of the following: a quantity of the at least one coroutine, different states of the at least one coroutine at an application level, and duration of the different states.

11. The interface display device according to claim 9 or 10, wherein the second running information comprises at least one of the following: kernel scheduling information of the thread corresponding to the first coroutine, and a first time slice of the thread corresponding to the first coroutine; the kernel scheduling information comprises at least one of the following: different states of the thread that is corresponding to the first coroutine and that is in a kernel mode, duration of the different states, and information about a processor used by the thread corresponding to the first coroutine; and the first time slice is used to reflect a time projection of the first coroutine on the thread.

12. The interface display device according to any one of claims 9 to 11, wherein the display unit is further configured to display a third interface, and the third interface comprises processes of changes over time in quantities of a plurality of coroutines in different states at the application level; and
that the display unit is configured to display the first interface comprises:
the display unit is specifically configured to display the first interface in response to a second operation of the user on the third interface.

13. The interface display device according to claim 12, wherein the second operation is used to determine a first time interval selected in the third interface, and the first interface displays running information corresponding to the first time interval.

14. The interface display device according to any one of claims 9 to 13, wherein the interface display device further comprises:
an obtaining unit, configured to obtain performance analysis data in a running process of an application, wherein the performance analysis data is used to obtain the first running information and the second running information.

15. The interface display device according to any one of claims 9 to 14, wherein the first operation is an operation on the first coroutine in the first interface.

16. The interface display device according to any one of claims 9 to 15, wherein the second interface is used for the user to perform problem analysis and processing on a coroutine/thread.

17. An interface display device, comprising a processor, wherein the processor is coupled to a memory, the memory is configured to store a program or instructions, and when the program or the instructions are executed by the processor, the interface display device is enabled to perform the method according to any one of claims 1 to 8.

18. A computer storage medium, comprising computer instructions, wherein when the computer instructions are run on a computer, the computer is enabled to perform the method according to any one of claims 1 to 8.

19. A computer program product, wherein when the computer program product runs on a computer, the computer is enabled to perform the method according to any one of claims 1 to 8.
